Europäisches Patentamt

European Patent Office

Office européen des brevets

(11) Publication number: 0 291 924 B1

# EUROPEAN PATENT SPECIFICATION

(45) Date of publication of patent specification: 03.08.94  (51) Int. Cl.5: H04N 9/28

(21) Application number: 88107871.1

(22) Date of filing: 17.05.88

(54) Convergence correction circuit.

(30) Priority: 18.05.87 JP 118771/87
27.04.88 JP 102510/88

(43) Date of publication of application:
23.11.88 Bulletin 88/47

(45) Publication of the grant of the patent:
03.08.94 Bulletin 94/31

(84) Designated Contracting States:
DE FR GB

(56) References cited:
GB-A- 2 176 679
US-A- 4 422 019

PATENT ABSTRACTS OF JAPAN, vol. 9, no.
154 (E-325)[1877], 28th June 1985;& JP-A-60
33 791 (TOSHIBA K.K.) 21-02-1985

(73) Proprietor: HITACHI, LTD.
6, Kanda Surugadai 4-chome
Chiyoda-ku, Tokyo 100(JP)

(72) Inventor: Yamada, Takeo
24-30, Gumizawa-1-chome
Totsuka-ku Yokohama(JP)
Inventor: Ikeda, Miyuki
Sumiya Haitsu 3, 1056-1
Nakatacho Izumi-ku Yokohama(JP)
Inventor: Kimoto, Toshiyuki
Hitachi Fujimiryo, 1545
Yoshidacho Totsuka-ku Yokohama(JP)
Inventor: Ogino, Masanori
14-17, Gontazaka-3-chome
Hodogaya-ku Yokohama(JP)
Inventor: Fujikura, Tsuneo
Hitachi Fujimiryo, 1545
Yoshidacho Totsuka-ku Yokohama(JP)
Inventor: Arakawa, Yoshihiro
Hitachi Fujimiryo, 1545
Yoshidacho Totsuka-ku Yokohama(JP)

(74) Representative: Altenburg, Udo, Dipl.-Phys. et
al
Patent- und Rechtsanwälte
Bardehle . Pagenberg . Dost . Altenburg .
Frohwitter . Geissler & Partner
Galileiplatz 1
D-81679 München (DE)

**Description**

BACKGROUND OF THE INVENTION

The present invention relates to a convergence correction circuit of a display using a CRT, and in particular to such a convergence correction circuit suitable to a multiscan projection display capable of coping with a plurality of different deflection frequencies.

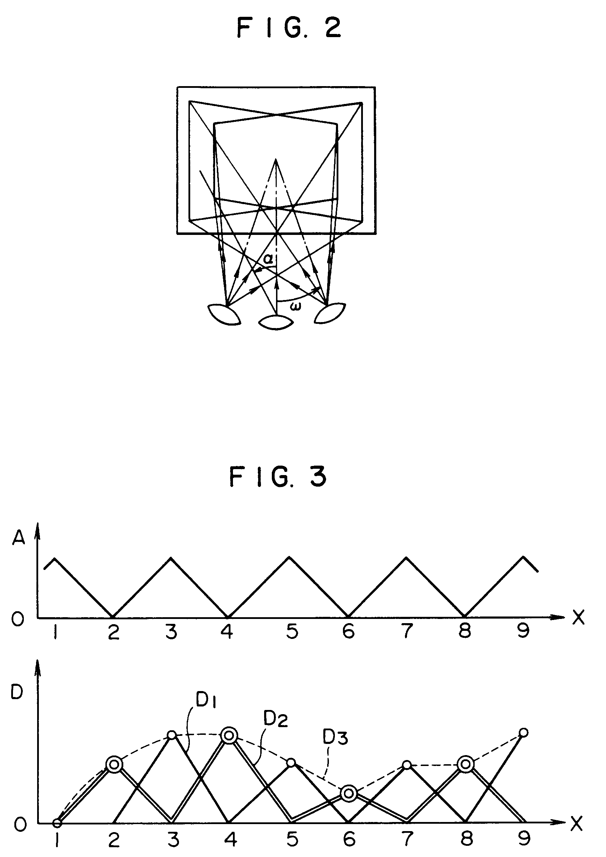

In a projection display, three projection tubes comprising red, green and blue tubes are typically arranged in a horizontal direction together with a projection lens to project and synthesize a color image onto a screen. Since red and blue images are projected onto the screen in a slant direction, a keystone distortion as shown in Fig. 2 is generated on the basis of projective geometry, resulting in a color shift.

This color shift has heretofore been corrected by mounting a convergence yoke (hereafter abbreviated as CY), which is similar to a deflection yoke and which supplementally deflects an electron beam in two directions, i.e. horizontally and vertically, onto the neck section of a projection tube, and by applying the output of a convergence amplification section to the CY. A correction signal applied to the CY is desired to be synchronized to the deflection scanning period and be capable of correcting a color shift pattern with high precision. There are correction waveform generating means of analog scheme and digital scheme. Although the analog scheme is simple, it has a drawback of coarse precision. Although the digital scheme has high correction precision, it has a drawback of high cost because a large memory capacity is needed.

Therefore, in the prior art, it is common to additively combine both analog and digital correction signals.

A method for reducing the needed memory capacity is described in United States Patent US-A-4422019 issued in 1983. In accordance with that method, the screen is represented by approximately 16 x 16 representative points, and only the correction information of those representative points is memorized while the remaining areas are interpolated by using data of the representative points. In a convergence signal generating circuit described in the United States Patent US-A-4422019, interpolation in the horizontal direction of the screen is performed by using a conventional low-pass filter, while interpolation computation in the vertical direction is performed in a digital or analog way to generate a correction signal. Such a prior art is suitable to one specific scanning format. However, it has a drawback that a large memory capacity is needed in application to a so-called multiscan display capable of displaying formats of a plurality of schemes which are different in horizontal frequency and screen size, for example. Even if correction is completed in one format, for example, therefore, a color shift is generated when the horizontal frequency of the display is somewhat changed, resulting in a problem.

Further, in case a convergence correction signal is generated in a projection display of the prior art, correction waveforms synchronized to the deflection scanning period must be generated in any case, although red is opposite to blue in polarity.

In a conventional technique, the horizontal deflection current is detected as a voltage signal by using some means, and waveforms are synthesized on the basis of the resultant voltage signal.

This conventional scheme has a problem that a color shift remains in the left end portion of the screen. The reason will now be described. The above described waveform synthesis processing needs a finite delay time. The delay time typically has a value equivalent to approximately 2 to 3%. Since a picture of a CRT is formed by the horizontal scanning and the vertical scanning, the left end portion of the screen corresponds to the position immediately after the high-speed horizontal retrace line. Since the correction signal information reaches there late, the color shift remains in a portion located at the left end portion of the screen and occupying approximately 2 to 3% of the total screen width.

Further, if the deflection frequency changes, the voltage amplitude and phase of a parabolic signal changes, resulting in deterioration of picture quality.

An object of the present invention is to provide a correction circuit capable of reducing a picture distortion such as the color shift even for various signal sources which are different in horizontal scanning frequency.

Another object of the present invention is to provide a horizontal interpolation scheme which is free from the above described drawbacks of the prior art and which is able to deal with a wide variety of formats with a small capacity of memory.

Another object of the present invention is to reduce the color shift.

SUMMARY OF THE INVENTION

These objects are achieved in a convergence correction circuit as defined in the appended claims.

EP 0 291 924 B1

BRIEF DESCRIPTION OF THE DRAWINGS

Fig. 1 is a circuit diagram showing a first embodiment of the present invention.

Fig. 2 is a diagram used for explaining a state of color shift.

Fig. 3 shows waveforms of a principal part of the first embodiment illustrated in Fig. 1.

Fig. 4 is a diagram used for explaining a conventional problem.

Figs. 5, 6 and 7 show waveforms of a principal of the present invention.

Fig. 8 shows a circuit diagram of a second embodiment of the invention.

Fig. 9 shows a circuit diagram of a third embodiment of the invention.

Fig. 10 shows waveforms of the principal part of the second embodiment.

Fig. 11 is a waveform diagram used for explaining the embodiment of Fig. 3.

Fig. 12 is a circuit diagram showing a primary part of a fourth embodiment.

Fig. 13 is a circuit diagram showing a primary part of a fifth embodiment.

Fig. 14 is a circuit diagram of a sixth embodiment of the present invention.

Fig. 15 is a circuit diagram of a primary part of a seventh embodiment according to the present invention.

Fig. 16 is a circuit diagram of a principal part of an eighth embodiment according to the present invention.

Fig. 17 is a circuit diagram of a principal part of a ninth embodiment according to the present invention.

Fig. 18 is a circuit diagram of a tenth embodiment of the present invention.

Fig. 19 shows waveforms of a principal part of the tenth embodiment according to the present invention.

Fig. 20 is a circuit diagram of a principal part of an eleventh embodiment according to the present invention.

Fig. 21 shows waveforms of the principal part of the eleventh embodiment according to the present invention.

Fig. 22 is a circuit diagram of a principal part of a twelfth embodiment according to the present invention.

Fig. 23 shows waveforms of the principal part of the twelfth embodiment according to the present invention.

Fig. 24 is a concrete circuit diagram of a maximum value detecting and holding circuit illustrated in Fig. 22.

Fig. 25 is a circuit diagram of a principal part of a thirteenth embodiment according to the present invention.

Fig. 26 shows waveforms of the principal part of the thirteenth embodiment.

DESCRIPTION OF THE PREFERRED EMBODIMENTS

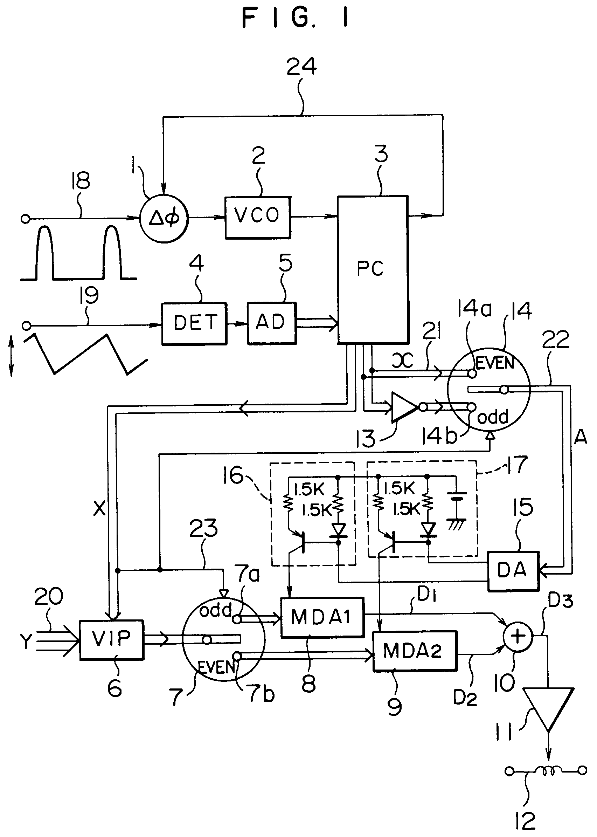

A first embodiment of the present invention is shown in Fig. 1. The configuration and operation of Fig. 1 will now be described.

In Fig. 1, numeral 1 denotes a phase detector, and numeral 2 denotes a voltage-controlled oscillator having an oscillation frequency of approximately 1.6 MHz. Numeral 3 denotes an 8-bit programmable counter (PC), whose output 24 comprises pulses of approximately 64 kHz. The output 24 of the PC 3 is negatively fed back to the phase detector 1 and compared in timing with the input horizontal synchronization signal supplied to an input 18 or a horizontal retrace line pulse generated by a separate horizontal deflection circuit. The circuit functions as a well-known PLL loop as a whole. Since the repetition frequency $f_H$ of the input horizontal retrace line pulse signal varies from 16 kHz to 80 kHz depending upon the signal source, the oscillation frequency of the voltage-controlled oscillator (hereafter abbreviated to VCO) 2 varies from approximately 4 MHz to 20 MHz correspondingly thereto.

The programmable counter (hereafter abbreviated to PC) 3 applies frequency demultiplication to the output of the VCO at a ratio of approximately

$$\frac{1}{2^8} = \frac{1}{256}$$

and sends out output pulses 24 having the same frequency and timing as those of the input $f_H$. The peak-to-peak amplitude of a signal 19 proportional to the horizontal deflection current is detected in an envelope detection circuit 4 to produce a DC voltage at an output terminal of the envelope detection circuit 4. This

3

DC voltage has a value nearly proportional to the horizontal size of the screen.

The DC voltage is converted into a digital signal having approximately 7 bits by an A-D converter 5. The A-D converter 5 need not be an expensive A-D converter for successively digitizing a high speed AC signal, but a well-known inexpensive commercially available A-D converter which simply converts a DC voltage into a digital value can be used. In drawings of the present application, multiple lines mean flow of digital signals, while single lines mean flow of analog signals or one-bit digital signals.

The digital signal representing the horizontal size of the screen is applied to a program terminal of the PC 3 as described later. The PC 3 includes a first section and a second section. The first section is an up counter which counts up from 0 to $2^7$-1 and which has a programmable count start point. The second section is an up counter which counts up from 0 to $(2^7$-1) succeedingly after the count of the first section and which has a programmable count end point. In other words, the PC 3 as a whole is equivalent to a single 8-bit counter in which the count start point and the count end point are respectively programmable. Into 7 bits of the count end point of the second section of the PC 3, the output of the A-D converter is set.

Into the count start point of the first section, one's-complement of the output of the A-D converter 5 is set. If the horizontal size is increased, for example, therefore, the first section of the PC 3 starts count up with the start point closer to the lower limit 0 of the start point as compared with that taken when the horizontal size is small, and the second section terminates counting with the end point closer to the upper limit ($2^7$-1) of the end point as compared with that taken when the horizontal size is small. At the moment of termination, the PC 3 generates the output pulse 24 and concurrently returns to a value of the start point to resume the count up.

Information of respective bits of the PC 3 is used as an 8-bit address signal on the virtual scanning line coordinate system. Four high-order bits correspond to 16 or less representative grid points obtained by sampling the screen in the horizontal direction.

The horizontal address signal comprising 4 high-order bits is applied to a well-known vertical interpolation processing section (VIP) 6 together with an address signal 20 of the vertical direction produced by different means. Data of approximately 16 x 16 representative grid points are stored in the VIP 6. EPROM means capable of rewriting the data by a well-known technique is also contained in the VIP 6. Further, well-known means for generating vertically interpolated digital data used for color shift correction as its output is also contained in the VIP 6. Although not illustrated, low-order bits of the horizontal address are also applied to the VIP 6 to function as the timing clock of the digital processing. The output of the VIP 6 is supplied to a data selector 7. A different input 23 is supplied to the data selector 7 at its control terminal. The input 23 is a signal representing the least significant bit (LSB) among the 4 high-order bits of the horizontal address. When the input 23 is "1", the data selector 7 is connected to an output terminal of odd side. When the input 23 is "0", the data selector 7 is connected to an output terminal 7b of even side. Outputs of the odd side and even side are supplied to DA converters having multipliers MDA1 8 and MDA2 9, respectively. As the MDA1 8 and the MDA2 9, AD 1508 produced by Analog Devices, for example, may be used. Analog outputs of the DA converters are added in an adder 10. The resultant sum is supplied to a coil 12 of a convergence yoke via an amplifying section 11. The current flowing through the coil 12 applies the supplemental deflection to the electron beam of the CRT to perform the required correction for the color shift.

On the other hand, 4 low-order bits 21 of the horizontal address signal are connected to an even-side input terminal 14a of a data selector 14 and an inverter 13. The output of the inverter 13 is connected to an odd-side input terminal 14b of the data selector 14. Depending upon the value (1/0) of the control input 23 supplied to a control terminal of the data selector 14, the signal of the odd/even side input is obtained at the output of the data selector 14. The output of the data selector 14 is supplied to a D-A converter 15. As the D-A converter, a portion of the same converter as the already described MDA1 8 corresponding to 4 high-order bits can be used. A pair of analog current outputs are produced by the D-A converter. The D-A converter 15 is so configured that the sum of the pair of output currents may be constant. The already described AD 1508 has this property. If the AD 1508 is not available, however, a conventional single-output D-A converter and an operational amplifier for inverting the output of the conventional single-output D-A converter may be used. In any case, the pair of current outputs having a complementary relation are supplied to analog multiplication terminals of the already described MDA1 and MDA2 via current Miller circuits 16 and 17.

The operation of the inverter 13 and the data selector 14 will now be described. In reality, the signal 21 is an address signal comprising 4 bits. For clearer understanding, however, it is now assumed that the signal 21 comprises 2 bits. Asuuming now that the signal 21 is X and the output of the inverter 13 is $\overline{X}$, an output 22 of the data selector can be represented as A shown below.

```
control
input 23   0,   0,   0,   0,   1,   1,   1,   1,   0,   0 ···
         X  00,  01,  10,  11,  00,  01,  10,  11,  00,  01 ···
         X̄  11,  10,  01,  00,  11,  10,  01,  00,  11,  10 ···
         A  00,  01,  10,  11,  11,  10,  01,  00,  00,  01 ···
```

That is to say, it is understood that the output A forms a triangular wave which rises when the signal at the control input 23 is 0 and which falls when the signal at the control input is 1.

Portions denoted by numerals 15, 16, 17, 8 and 9 in Fig. 1 will now be described. The waveform of the output current of the D-A converter 15 shown in Fig. 1 having a positive polarity is represented by A of Fig. 3. The abscissa indicates an address (X = 0 to 15) represented by 4 high-order bits of the horizontal address. The above described property that the output A rises until the value of X passes through an odd number and reaches the next even number and the output A falls until the value of X passes through an even number and reaches the next odd number is shown. The output current of this positive polarity is supplied to the multiplication terminal of the multiplying DA converter MDA1 8 via the current Miller circuit 16. The output signal of the MDA1 8 has a waveform $D_1$ of Fig. 3 represented by a single solid line. That is to say, it is understood that the output signal has a waveform obtained by applying horizontal interpolation to data of representative grid points with X = odd.

On the other hand, the other output, i.e., the complementary output of the D-A converter 15 is supplied to the MDA2 9 via the current Miller circuit 17. The output of the MDA2 9 has a waveform $D_2$ as represented by double solid lines in Fig. 3. This waveform is equivalent to a waveform obtained by applying horizontal interpolation to data of representative grid points with X = even. Finally, a signal having a waveform represented by a broken line $D_3$ in Fig. 3 is obtained at the output of an adder 10 of Fig. 1. As a result, a desired waveform resulting from applying horizontal interpolation to data of respective representative grid points is obtained.

By using the configuration of Fig. 1 heretofore described, it becomes possible to continuously track various formats, which are different in horizontal scanning frequency $f_H$ and horizontal screen size, and correct color shifts, because a change in $f_H$ can be tracked by the function of the PLL comprising the phase detector 1, VCO 2 and PC 3 of Fig. 1 and a change in horizontal screen size can be tracked with the count start point and the count end point by the configuration of the envelope detector 4, AD 5 and PC 3 as already described.

As means for horizontal interpolation, the prior art simply uses the fact that the impulse response of an analog low-pass filter is triangular. Since the duration width of the triangular wave is constant, however, it is necessary to prepare a plurality LPF's and change over between them for formats which are different in horizontal deflection speed.

If the horizontal deflection speed changes in the present embodiment, the repetition period of the triangular wave changes correspondingly. As a result, the distance width corresponding to the repetition period of the triangular wave on the screen can be kept nearly constant, continuous tracking being attained.

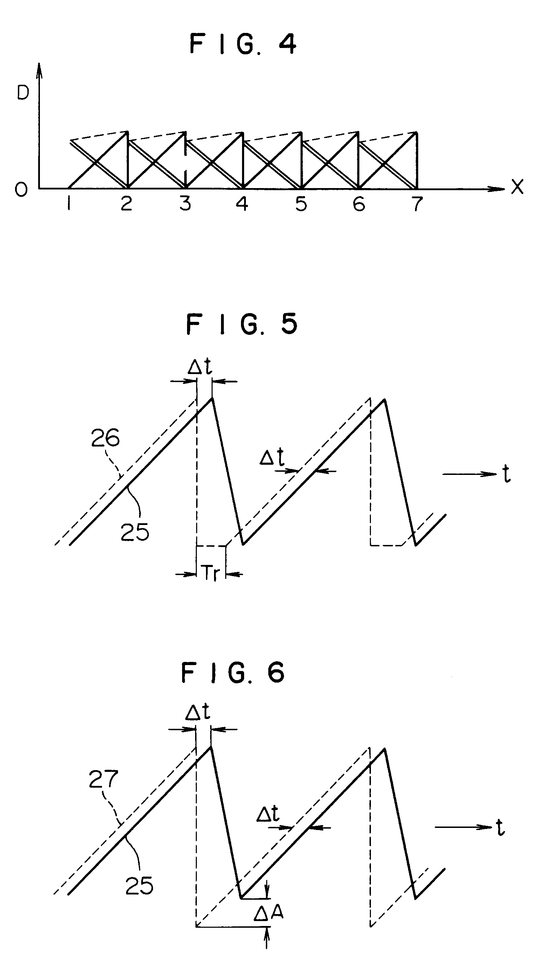

In the conventional technique described in the United States Patent No. 4422019, a multiplying D-A converter is used not for horizontal interpolation which is the object of the present invention, but for vertical interpolation within the VIP 6 of Fig. 1. In these conventional techniques, however, a component corresponding to the inverter 13 of Fig. 1 of the present embodiment is not shown. Accordingly, a change in address signal comprising 4 low-order bits at the output terminal 22 does not form triangular waves disposed at intervals of two grids so as to have symmetric ascending and descending portions as shown in Fig. 3, but form sawtooth waves having descending portions reset to momentarily descend at intervals of one grid. If it is attempted to use this mode for the purpose of horizontal interpolation, a drawback of uneven correction impairment is caused as described below. In this mode, the even side of the data selector 7 shown in Fig. 1 is converted into left adjacent grid point data, and the odd side is converted into right adjacent grid point data. Accordingly, even data and odd data alternately appear at the MDA1 8 and MDA2 9 at intervals of one grid space. Even if a slight mutual deviation exists between conversion gains of the MDA1 8 and the MDA2 9, therefore, it causes impairment on the picture in the vicinity of grid points as changes in the amount of electron beam deflection. Especially, there is a problem that the scanning line rolls like a sawtooth waveform when the electron beam undergoes supplementary deflection caused in a longitudinal direction by the convergence yoke 12. For example, the scanning line rolls like sawtooth waveforms as represented by broken lines in Fig. 4. Fig. 4 shows that ripples are caused even when the correction datum itself always assumes a constant value. In the form of the conventional technique, therefore, gains of D-A converters with analog multipliers contained therein corresponding to the MDA1 8 and MDA2 9 must be adjusted with extreme precision.

In the configuration of Fig. 1, the demand for the gain deviation of the MDA1 8 and MDA2 9 is largely moderated by the function of the novelly devised inverter 13, nonadjustment being attained, because the MDA1 8 deals with only data corresponding to odd addresses and the MDA2 9 deals with only data corresponding to even addresses, and hence the gain deviation can be easily corrected by rewriting digital data for correction stored in the VIP 6.

Another merit of the configuration of Fig. 1 as compared with the prior art is that the configuration of Fig. 1 withstands transitional glitch disturbance caused when the output analog values of the MDA1 8 and MDA2 9 suddenly change. The reason will now be described. In Fig. 3, the input to the MDA1 8, for example, is changed over from color shift correction data corresponding to $X = 3$ to color shift correction data corresponding to $X = 5$ at timing $X = 4$. And the weighting coefficient of the MDA1 8 is approximately zero as indicated by single solid lines of Fig. 3 at timing $X = 4$. Accordingly, the glitch disturbance is suppressed.

In the present embodiment, the VIP 6 of Fig. 1 is shown as a digital processing system. However, the above described analog interpolation scheme withstanding nonuniformity may also be applied to the vertical interpolation function of the VIP 6. This will be described later as a version.

Merits of the configuration of Fig. 1 have heretofore been described. It has some remaining demerits, and the means of eliminating the demerits will now be described.

First of all, an important fact to be noted is that the value of the 8-bit address generated by the PC 3 of Fig. 1 should be considered to be present not on an annular cyclic coordinate system but on a nonannular coordinate system which is cut and reset from the end point to the start point at the start time of the horizontal retrace line. In the conventional digital convergence system, the PC 3 is realised as an annular coordinate system which always counts from 0 to $2^8-1$. In the annular coordinate system, the delay time for digital signal processing in the VIP 6 can be easily overcome by simply using a cyclic shift of the address value corresponding to the delay time, because the start point and the end point are no more than two adjacent points on the cyclic coordinate system.

In the nonannular coordinate system, however, the start point and the end point are disposed at extremities and are completely different. In Fig. 1, therefore, it is necessary that the timing of the count start of the PC 3 precedes the timing of the start of the horizontal scanning at the left end of the screen by at least the delay time of the processing system.

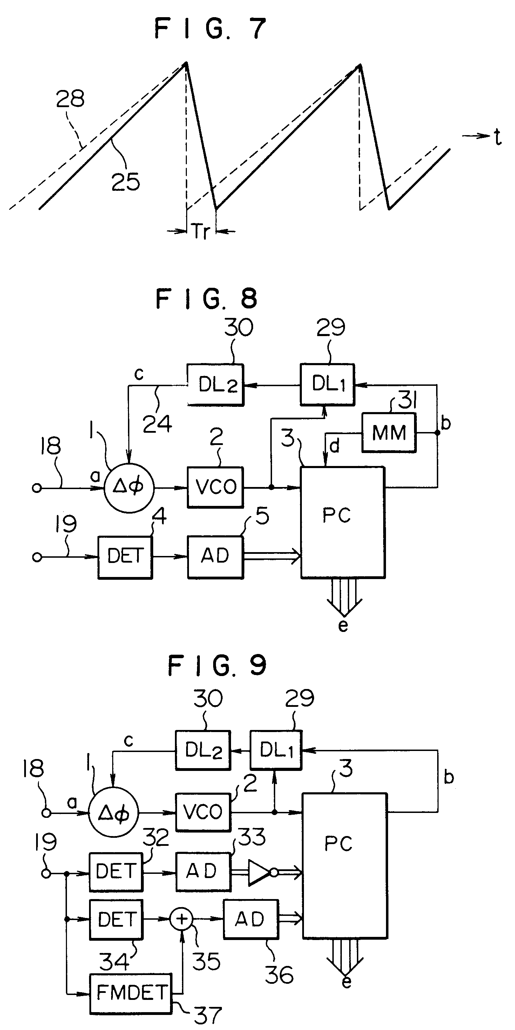

In the circuit of Fig. 1, the timing relationship between the address value of the output of the PC 3 and the horizontal deflection scanning becomes as indicated by waveforms of Fig. 7, where the abscissa represents time t. In Fig. 7, numeral 25 denotes a horizontal deflection position or a horizontal deflection current, and numeral 28 denotes an address output value. As evident from Fig. 7, the timing of the count start precedes the timing of the horizontal scanning start by the horizontal retrace line interval Tr. On the other hand, it is understood from the description made before by referring to Fig. 3 that the delay time of the processing system of Fig. 1 is incidentally delayed by an amount corresponding to $\Delta X = 1$ in performing horizontal interpolation. This is equivalent to approximately 1/16 of the horizontal period. On the other hand, the horizontal retrace line interval Tr is approximately 1/6 of the horizontal period. In addition, some delay is caused in the VIP 6 and a processing amplifier section 11. However, the total delay time is generally 1/6 or less of the horizontal period. Therefore, the above described necessary condition is satisfied. Accordingly, operation nearly complying with a request is performed. However, the operation is somewhat distant from the ideal operation.

For approaching the ideal operation, two typical satisfactory conditions exist. These address values are represented by broken line waveforms of Figs. 5 and 6. In Figs. 5 and 6, the abscissa represents time t, and a waveform 25 is identical to the waveform 25 of Fig. 7. Figs. 5 and 6 have a common property that the address value precedes the scanning movement 25 of the electron beam by time $\Delta t$ in an ascent process, i.e., a horizontal scanning interval. This $\Delta t$ is so set as to be nearly equal to the total delay time of the convergence circuit. Amounts Tr and $\Delta A$ will be described later.

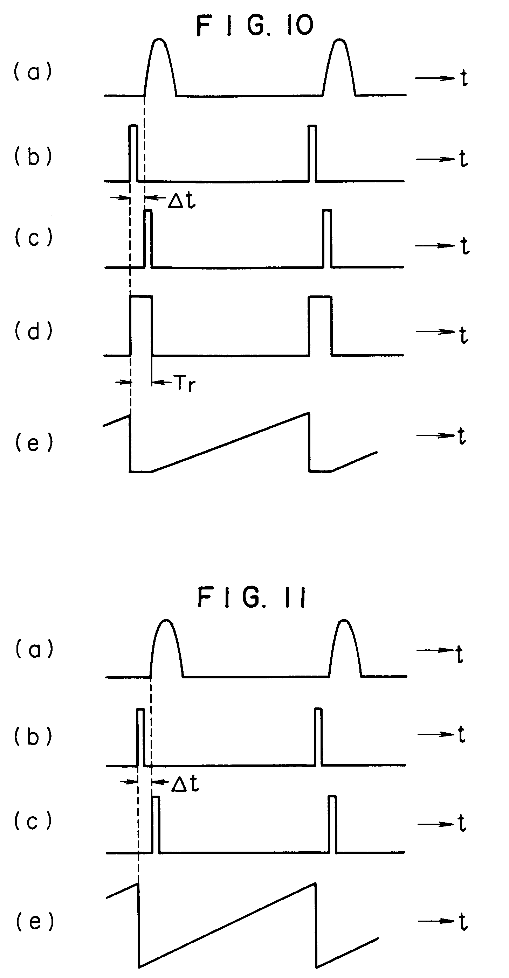

Fig. 8 shows the second embodiment. This circuit aims at deriving the address value indicated by broken lines of Fig. 5. Fig. 5 principally shows a portion which is different from that of Fig. 1. Remaining portions are the same as those of Fig. 1. Operation waveforms of Fig. 8 are shown in Fig. 10. Figs. 10a to 10e show waveforms appearing at points a to e of Fig. 8.

6

In Fig. 8, DL$_1$ 29 and DL$_2$ 30 denote pulse delay circuits. The DL$_1$ 29 delays a signal by a time nearly equivalent to the already described delay time of the VIP 6, MDA1 8 and MDA2 9 shown in Fig. 1. Since this delay time is equal to an integer multiple of the clock period, the DL$_1$ 29 can comprise a shift register for shifting the timing waveform of Fig. 10b by using the output signal of the VCO 2 as a clock.

The DL$_2$ 30 is provided for correcting the delay caused by the analog amplifier section 11 of Fig. 1. This value is typically equal to approximately 0.1 to 1 $\mu$sec and is a fixed value which does not depend upon the format of the input signal. Accordingly, a monomultivibrator having a pulse width set equivalent to the delay value can be used as the DL$_2$ 30. In Fig. 8, MM 31 denotes a monomultivibrator having a pulse width set nearly equal to or somewhat shorter than the retrace line interval Tr of the horizontal deflection circuit. The output pulse of the MM 31 is applied to a disenable terminal of the PC 3. While the output pulse of the MM 31 is applied, the PC 3 ceases from counting. Waveforms as shown in Figs. 10a to 10e are thus obtained. The waveform of Fig. 10e is identical with the desired waveform 26 represented by broken lines in Fig. 5.

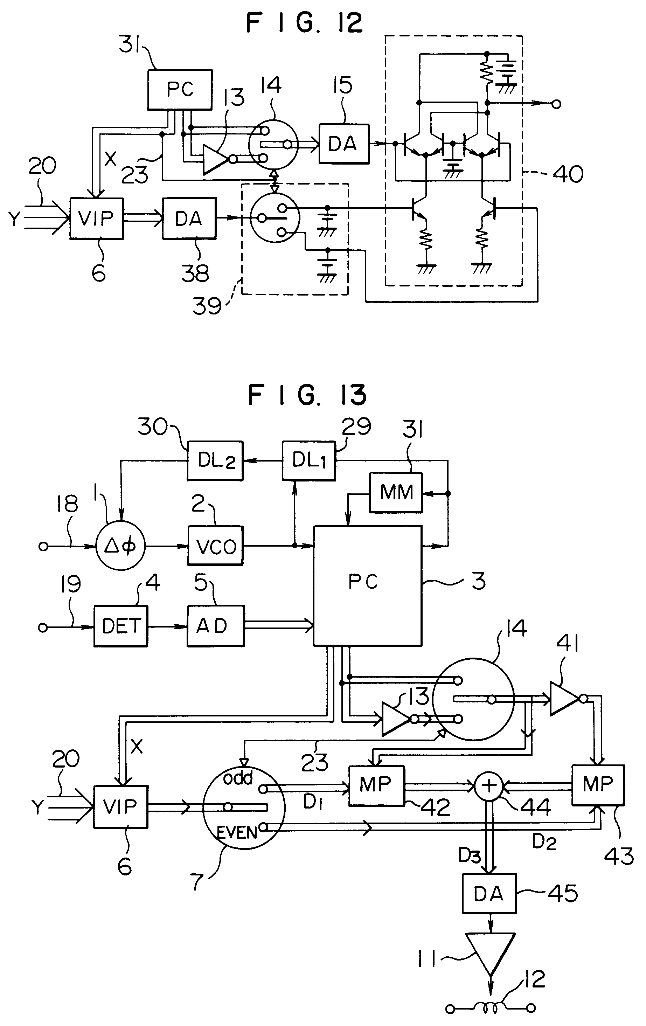

Fig. 9 shows a third embodiment. Numerals 29 and 30 are the same as those of Fig. 8. Numeral 32 denotes an amplitude detector for detecting the minimum value of the horizontal deflection sawtooth wave 19 corresponding to the left end of the screen as a DC voltage. Numeral 33 denotes a 7-bit A-D converter. The output of the A-D converter. The output of the A-D converter 33 is converted into one's complement bit by bit and supplied to the PC 3 to set the count start point of the PC 3. Numeral 34 denotes an amplitude detector for detecting the maximum value of the horizontal deflection sawtooth wave. The output of the amplitude detector 34 is added to the output of a frequency detector 37. The resultant sum is supplied to the PC 3 via an A-D converter 36 to set the count end point of the PC 3. Waveforms appearing at points a, b, c and e of Fig. 8 are shown in Fig. 11. Therefore, it is understood that the waveform 27 represented by broken lines of Fig. 6 is obtained as the horizontal address signal e.

The FMDET 37 functions to correct $\Delta$A illustrated in Fig. 6. A multiscan display typically operates so that the retrace line interval of the horizontal deflection circuit may be constant and only the scanning interval may change even if the horizontal scanning frequency f$_H$ of the input signal is raised.

Therefore, the magnitude of $\Delta$A of Fig. 6 increases nearly in proportion to f$_H$. It is thus understood that the amount $\Delta$A can be compensated by the function of the FMDET 37 and the adder 35 shown in Fig. 9.

The DET 32 and the DET 34 can be constituted by using a well-known amplitude detector circuit comprising a diode and a capacitor. Further, a well-known frequency detector of pulse count scheme can be used as the FMDET 37. Three embodiments have heretofore been described. However, intermediate versions between them may be used, or a part of the function may be replaced by a microcomputer.

Fig. 12 shows a fourth embodiment obtained by modifying the latter half portion of Fig. 1. Numerals 3, 6, 13, 14, 15 and 23 of Fig. 12 are the same as those of Fig. 1. Numeral 38 denotes a D-A converter, and numeral 39 denotes a sample-and-hold circuit. Odd data D$_1$ are obtained at an upper output of the sample-and-hold circuit 39, while even data D$_2$ are obtained at a lower output of the sample-and-hold circuit 39. Numeral 40 denotes a weighted average circuit. Assuming that a weighting coefficient is W, the output of the weighting average circuit 40 is represented as

$$D_3 \, \alpha \, WD_2 \; + \; (1 - W) \, D_1 \qquad (1)$$

Assuming that differential voltage applied to base electrodes of four transistors located at the upper side of the circuit 40 is E, the weighting coefficient W is given by

$$W \; = \; \frac{1 + \tanh \dfrac{qE}{2KT}}{2} \qquad (2)$$

where
K: Boltzmdnn's constant
T: absolute temperature
q: charge of electron

$$\frac{2KT}{q} \fallingdotseq 60 \ mV.$$

By selecting approximately ±100 mV as the peak-to-peak value of the triangular differential voltage E, therefore, it follows that

$$W = \frac{1 + \tanh\dfrac{\pm 100 \ mV}{60 \ mV}}{2} = 0.97, \ 0.03.$$

Weighting coefficients nearly satisfying the requested condition W = 1 to 0 are thus obtained. As a result, color shift correction data horizontally interpolated are obtained at the output of the weighted average circuit 40.

Description of the fourth embodiment is terminated here. Simplified versions complying with application will now be described.

In application in which the horizontal screen size is nearly constant, the count start point and end point of the PC 3 can be fixed. That is to say, the PC 3 need not be a programmable counter in this case, but may be simply a counter capable of counting from 0 to $2^8$-1.

Further, in application in which the horizontal screen size need not be continuously changed but can be simply switched between several sizes, the count start point and end point may be simply set and changed over by using a mechanical switch or a microcomputer.

Although not illustrated in Figs. 2 and 3, a portion of the second embodiment shown in Fig. 8 or the third embodiment shown in Fig. 9 corresponding to the numerals 15, 16, 17, 8, 9 and 10 of Fig. 1 may be replaced by a digital weighting average circuit and a D-A converter. As an example, an embodiment combined with Fig. 8 is shown in Fig. 13 as a fifth embodiment.

In Fig. 13, a portion comprising the circuits 1, 2, 3, 4, 5, 18, 19, 29, 30 and 31 is the same as that of Fig. 8. And a portion comprising the circuits 6, 7, 13, 14, 20, 23, 11 and 12 is the same as that of Fig. 1. An inverter 41 is used for deriving a digital value of a triangular wave having a complementary polarity. Numerals 42 and 43 denote digital multipliers, 44 a digital adder, and 45 a DA converter. In operation, weighting calculation similar to the expression (1) is performed.

Under the present state of the digital technique, the fifth embodiment is disadvantageous as compared with the form of Fig. 1 because the multipliers 42 and 43 are expensive. However, it is presumed that the fifth embodiment will become conversely more advantageous configuration as a result of technical advancement.

In that case as well, the function of delay elements 29 and 30 of Fig. 13 based on the nonannular horizontal address coordinate system which has been made clear in the consideration process of the present invention is regarded as an important technique for implementing a digital convergence circuit of continuous tracking type.

Irregular luminance impairment caused when data lack in the number of bits will now be described.

Assuming that the magnitude of the lowest bit is 1 LSB (least significant bit), a digitized datum cannot help generating a rounding error of ±1/2 LSB. In general, the permissible limit of color shift deviation is approximately one pixel. Pixel refers to the size of the minimum unit constituting the screen. In the vertical direction, a space between scanning lines correspond to a pixel. In the description of the present invention, it is hereafter assumed that the screen comprises approximately 1000 x 1000 pixels at most. An ultrahigh definition display for application of CAD/CAM nearly corresponds to this. The limit of impairment perception is approximately 0.25 pixel. Accordingly, it is desirable that the deviation of $\frac{1}{2}$ LSB does not exceed 0.25 pixel.

On the other hand, the maximum amount of color shift between green/red to be corrected (which is equal in magnitude and opposite in polarity between green/blue) is nearly in proportion to a concentration angle $\omega$ and a horizontal angle of view $\alpha$ illustrated in Fig. 2. The maximum peak-to-peak value L of shift in the vertical direction can be related to the height H of the screen as

$$L \fallingdotseq \omega \tan \alpha \cdot H \qquad (3)$$

Assuming now that $\omega$ = 0.1 rad and tan $\alpha$ = 0.5 as a practical example, it follows that

L ≒ 0.05 x H = 50 h　　(4)

where h represents the size of one pixel and

$$h = \frac{H}{1000}$$

That is to say, L is approximately equal to 50 pixels. This color shift deviation can be reduced to approximately 1/7, i.e., approximately 7 h by a different analog convergence circuit.

This must be further decreased by a digital convergence circuit. Accordingly, the maximum range M to be dealt with by the digital convergence circuit becomes

M ≒ 7 h　　(5)

From the above described limit of color shift perception, 1 LSB ≒ 0.5 h. Accordingly, the necessary number n of bits of digital data can be calculated as

$$n \doteqdot \log_2 \frac{7\ h}{0.5\ h} = \log_2 14 \doteqdot 4 \qquad (6)$$

That is to say, approximately 4 bits seem sufficient.

Unadvantageously, however, this is a necessary condition and not a satisfactory condition. Certainly, the precision of 4 bits is sufficient for a color shift itself. However, there is a different problem of irregularity of luminance caused by a rounding error. This is caused by a fact that gaps between sample points are not uniform. That is to say, it is caused by a fact that the brightness looks high where the scanning lines are dense and the brightness looks low where the scanning lines are sparse. This is remarkable especially in a monochromatic picture comprising red color alone, for example. The perception limit of irregularity of luminance caused by irregularity of scanning line density is as extremely severe as approximately 3% in a value converted into a relative change of density. Accordingly, the magnitude of LSB should be smaller than 0.5 h satisfying the limit of color shift perception but 0.03 h satisfying the limit of irregularity of luminance. Therefore, the required number of bits can be represented by

$$n \doteqdot \log_2 \frac{7\ h}{0.03\ h} = \log_2 233 \doteqdot 8\ \text{bits} \qquad (7)$$

and

1 LSB ≦ 0.03 h　　(8)

That is to say, approximately 8 bits are required. In the conventional technique, therefore, 8-bit digital data were typically used.

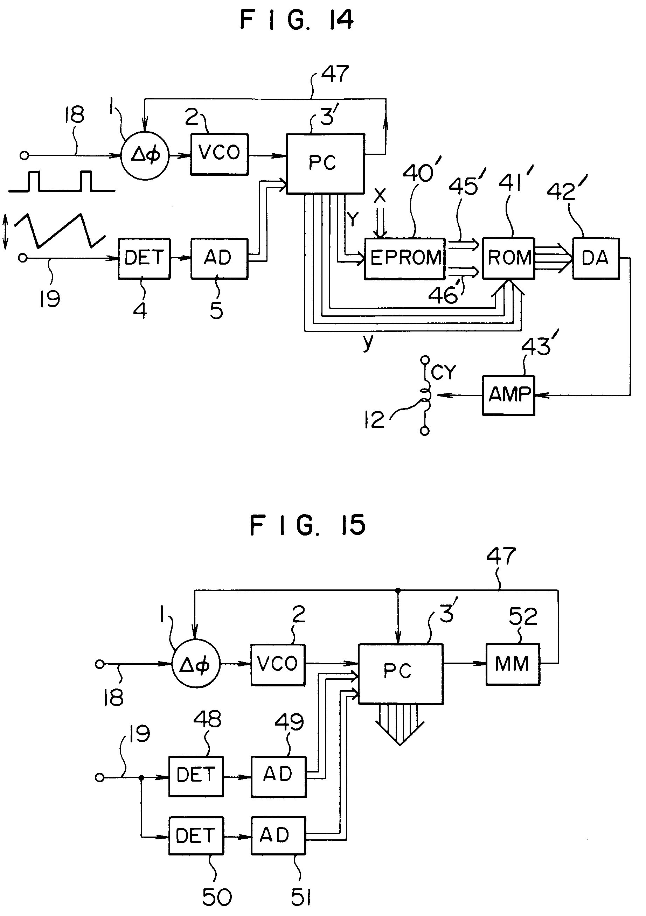

A sixth embodiment of the present invention in which the irregularity of color, heretofore described is prevented is shown in Fig. 14. The configuration and operation of Fig. 14 will now be described.

Numeral 1 denotes a phase detector, and numeral 2 denotes a voltage controlled oscillator having a frequency of approximately 240 kHz. Numeracal 3′ denotes a 12-bit programmable counter, which sends out an output 47. The output 47 comprises pulses of approximately 60 Hz. The output 47 is negatively fed back to the phase detector 1 and compared in timing with the input vertical synchronization signal at an input 18 or vertical retrace line pulse generated by a different vertical deflection circuit, resulting in the function of a well-known PLL loop as a whole. The repetition frequency fv of the input vertical synchronization signal changes from 40 Hz to 120 Hz in accordance with the signal source. The frequency of the voltage controlled oscillator (hereafter abbreviated to VCO) 2 correspondingly changes from approximately 160 kHz to 480 kHz. In the programmable counter (hereinafter abbreviated to PC) 3', the frequency is multiplied with a ratio of approximately $1/2^{12} \fallingdotseq 1/4000$, resulting in the output pulse 47 which agrees in frequency and timing with the input $f_H$. A digital signal representing the vertical screen size outputted from the A-D converter is applied to a program terminal of the PC 3' as described later. The PC 3' includes a first section and a second section. The first section is an up counter which counts up from 0 to $2^{11}-1$ and which has a programmable count start point in the same way as the PC 3 of Fig. 1. The second section is an up counter which counts up from 0 to $(2^{11}-1)$ succeedingly after the count of the first section and which has a programmable count end point.

The output of the A-D converter 5 is set into 7 high-order bits among 11 bits of the count end point for the second section of the PC 3'. Remaining low-order bits are always set to 0. Into 7 high-order bits of the count start point of the first section, one's complement of the output of the A-D converter 5 is set. Into its remaining low-order bits, 1's are set. If the vertical size is increased, for example, therefore, the first section of the PC 3' starts count up from a value closer to the lower limit 0 of the start point, and the second section terminates counting with a value closer to the upper limit $(2^{11}-1)$. At the moment of count termination, the PC 3' generates the output pulse 47 and concurrently returns to the value of the start point to resume the count up.

Information of respective bits of the PC 3' is used as a 12-bit address signal on the virtual scanning line coordinate system. Four high-order bits thereof correspond to 16 or less representative grid points obtained by sampling the screen in the vertical direction.

This is applied to an EPROM (electrically rewritable memory) 40 together with the 4-bit horizontal address signal generated by some different means similar to conventional means. Horizontal addresses 0 to 15 correspond to 16 or less sample points splitting the horizontal width of the screen. Data respectively corresponding to 16 x 16 sample points are stored in the EPROM 40. These data can be rewritten by well-known means.

Each datum corresponding to a sample point has two groups, each group comprising 4 bits. The first group comprising 4 bits corresponds to a datum for correcting color shifts at upper and lower adjacent sample points on the screen. And the second group comprising 4 bits corresponds to data of upper and lower adjacent sample points on the screen.

These data are read out from the EPROM onto signal lines as an upper adjacent datum 45 and a lower adjacent datum 46 as shown in Fig. 14. The information represented by these 8 bits in total is applied to a ROM (read-only memory) 41 for vertical interpolation as an address input. The information comprising the remaining 8 low-order bits of the 12-bit address signal on the above described virtual scanning line coordinate system is also supplied to the ROM 41 as the address signal. Therefore, the total number of addresses becomes

$$2^4 \times 2^4 \times 2^8 \fallingdotseq 64 \text{ K}$$

A datum of 1 byte based on the interpolation formula is stored at each address. Accordingly, the total capacity is 64 K bytes.

The interpolation formula is represented as

$$D_{y,8} = D_{Y,4} + (D_{Y+1,4} - D_{Y,4}) \frac{y}{256} \qquad (9)$$

where

$D_{y,8}$ :   8-bit datum outputted by the ROM y represents a value of 8 low-order bits of the vertical address

$D_{Y,4}$ :   4-bit input of the upper adjacent sample Y represents a value of 4 high-order bits of the vertical address

$D_{Y+1,4}$ :   4-bit input datum of the lower adjacent sample.

The relationship between a virtual vertical scanning line coordinate and irregularity of luminance which forms a kernel of the present embodiment.

Since y is an integer in the expression (4), the magnitude of LSB is 1. On the other hand, the maximum of a value contained in ( ) of the expression (9) corresponds to M = 7 h on the basis of the above described expression (5). Accordingly, the magnitude $\epsilon$ of LSB in $D_{y,8}$ is represented as

$$\epsilon = 7 \ h \ \times \ \frac{1}{256} = 0.027 \ h \qquad\qquad (10)$$

It is understood that this magnitude just satisfies the perception limit specification of irregularity of luminance represented by the expression (8).

If a coordinate system (approximately 1000 lines/screen height) nearly equal to the number of actual scanning lines is selected in the same way as the prior art, the number of scanning lines per sample section becomes

$$\frac{1000}{16} \fallingdotseq 70.$$

Accordingly, the value 256 of the expression (9) is changed to approximately 70. The value of $\epsilon$ in the expression (10) thus becomes approximately 0.1 h, resulting in very remarkable irregularity of luminance. Therefore, the prior art was a scheme which posed no problem only in the so-called single scan having a fixed vertical frequency and a fixed vertical size.

In a single scan scheme based on the prior art, a coordinate system having as many lines as the actual scanning lines was adopted. In the system of the prior art, therefore, the components 1, 2, 3′, 4 and 5 of Fig. 14 were not present. Actual scanning lines were counted by a counter for counting simply horizontal retrace line pulse i.e., a scanning line counter instead of the component 3′. The principle, therefore, a problem of line count precision, i.e., a problem of rounding error was not present. Instead, different EPROM data and a different ROM interpolation table was necessary in Fig. 1 for a different format having a different number of scanning lines and a different vertical screen size.

In the present embodiment, a wide variety of formats can be automatically tracked by a set of EPROM data and a ROM interpolation table. This has been attained by discarding the unreliable read scanning line coordinate system which disadvantageously changes format by format and by using the virtual scanning line coordinate system having approximately four times the number of lines.

With reference to Fig. 14 again, the output of the ROM 41 is transmitted to a D-A converter 42 to be converted into an analog signal. The analog signal is supplied to a convergence coil 12 via a processing and amplifying section 43. At the convergence coil 12, the electron beam of the CRT undergoes supplementary deflection and the color shift is corrected. The processing and amplifying section 43 includes well-known LPF means for horizontal interpolation. In the LPF means, smoothing interpolation is performed among 16 samples arranged in the horizontal direction. Further, the processing and amplifying section 43 includes a well-known analog convergence circuit for performing coarse correction.

In Fig. 14, only one set of circuits are illustrated. However, the degree of freedom of color shift is four dimensional. That is to say, correction in the vertical and horizontal direction is necessary for respective colors of red and blue. Four sets are required for the block 40 and succeeding blocks of Fig. 14. The description of the sixth embodiment of the present invention is terminated here.

Some versions will now be described.

The ROM 41 of Fig. 14 can be replaced by digital multipliers and digital adders for performing the computation of the expression (9).

If a conventional A-D converter with high speed (such as sampling rate of approximately 480 kHz) and high precision (such as approximately 12 bits) can be used in a portion including blocks 1, 2, 3′, 4 and 5, it is possible to convert the input signal 19 into a 12-bit digital signal by using the A-D converter and use the 12-bit digital signal as the address signal.

Instead of the EPROM 41 shown in Fig. 14, an $E^2$PROM (Electrically Erasable and Programmable ROM) can be used.

In Fig. 14, the EPROM outputs two sets of data comprising the upper adjacent datum and the lower adjacent datum. Instead, however, an arbitrary number of sets ranging from 3 sets to 15 sets may be outputted, and a segmented curve interpolation formula based on the well-known Lagrange interpolation polynomial or Hermite interpolation polynomial may be used as the computation formula instead of the linear interpolation formula (9). Or the Whittaker interpolation formula which is a mathematical model of an ideal low-pass filter may be used. (See "Electrical Communication Handbook", published by Ohm-Sha, Japan, in 1979, p. 32). In case the curve interpolation formula is used, it is advantageous to use digital computing elements because otherwise the capacity of the ROM 41 is extremely large.

On the assumption that the maximum range of required correction amount is 7h indicated by the expression (5), the embodiment of Fig. 14 has been described. If instead the starting point is 50h of the expression (4), (i.e., if the analog convergence circuit is omitted), the necessary number of bits of a datum stored in the EPROM 40 becomes 7, and the necessary number of bits of the input to the DA 42 becomes 11. In this case, the necessary number of addresses of the ROM 41 becomes extremely large such as $2^7$ x $2^7$ x $2^8$ = $2^{22}$ = 4M addresses even if the linear interpolation is used. Therefore, it is suitable to use digital computing elements instead of the ROM.

By considering the expression (10) conversely, the number N of lines of the virtual scanning line coordinate system demanded for the present invention is typically defined as

$$N \geq (\text{the number of samples in the vertical direction})$$

$$\text{x} \quad \frac{\left(\begin{array}{l}\text{maximum value of difference in necessary} \\ \text{correction amount between adjacent samples}\end{array}\right)}{\left(\begin{array}{l}\text{magnitude of LSB of perception limit of} \\ \text{irregularity of luminance}\end{array}\right)} \tag{11}$$

In the description of the sixth embodiment, N is calculated as

$$N = 16 \text{ x } \frac{7h}{0.03h} \fallingdotseq 16 \text{ x } 256$$

$$= 4096 = 2^{12} \tag{12}$$

In the version described latest as well, the term of 7h in the expression (10) is considered to be nearly unchanged as described later. In the above described calculation of the necessary number of addresses, therefore, the value $2^8$ = 256 is used.

The reason will now be described. As understood from Fig. 2, the maximum value of difference in necessary correction amount between adjacent samples is maximized at the upper end portion or the lower end portion of the screen. Its magnitude is estimated as approximately 3.3h by dividing 50h of the expression (4) by the number 15 of samples. It is considered that 7h suffices even if other unknown factors are included. The above described reason has heretofore been described. Conversely, it can be said that the difference 7h in the necessary correction amount between the upper and lower adjacent samples used in the expression (10) in the description of the sixth embodiment corresponds to the worst case where the performance of the analog convergence circuit included in the processing and amplifying section 43 of Fig. 14 is considerably bad. Even if the performance of the analog convergence circuit is excellent, however, it is considerably difficult to make 7h of the expression (10) below 7h in industrially rational configuration. In a sample space, therefore, the minimum value of the necessary number of lines in the virtual scanning line coordinate system becomes 4h/0.03h $\fallingdotseq$ 130 lines. Assuming that 16 samples in total are present, the value of approximately 2000 lines is obtained. That is to say, approximately twice or more lines as many as 1000 actual scanning lines supposed are needed.

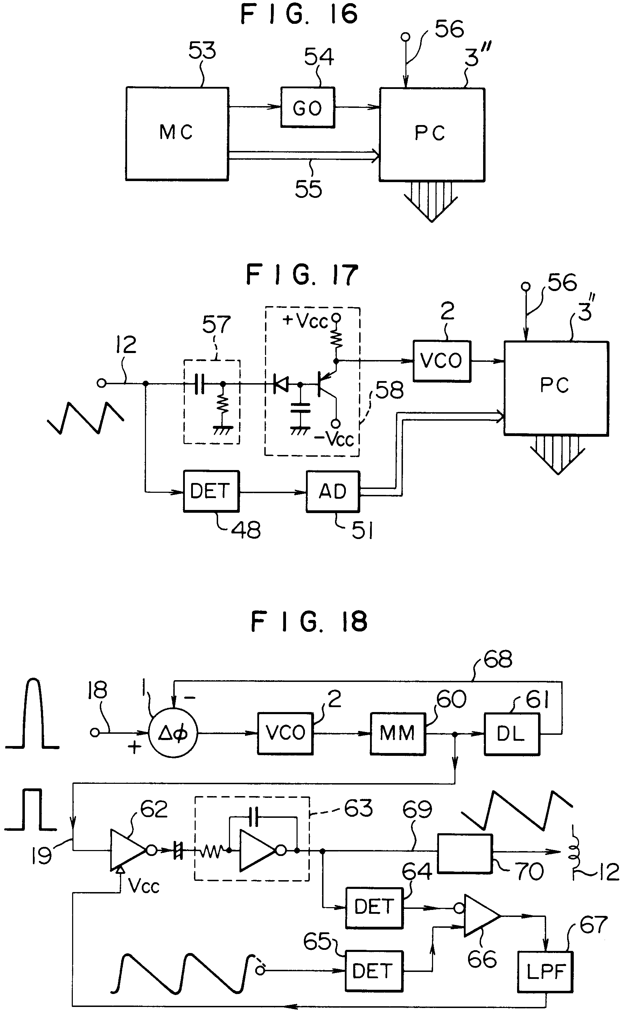

Fig. 15 shows a seventh embodiment of the present invention.

In Fig. 15, components 1, 2, 3', 11, 12 and 14 are the same as those of Fig. 14. Numeral 52 denotes a monostable multivibrator. The output pulse width is so set as to be nearly equal to the pulse width of the vertical deflection retrace line separately produced. During the interval of the pulse width, the PC 3' stops its counting operation. During the retrace line interval, therefore, the output address signal of the PC 3' ceases from change. When the electron beam returns to the upper portion of the screen, the counting is resumed. Numeral 48 denotes an amplitude detector (DET) for detecting the positive peak of the inputted vertical

EP 0 291 924 B1

deflection sawtooth wave signal, i.e., the size of the upper end of the screen as DC voltage. The output of the DET 48 is used to set the count start number of the PC 3′ via an A-D converter 49.

Further, a DET 50 detects the negative peak as DC voltage. The output of the DET 50 is used to set the count end number of the PC 3′ via an A-D converter 51. A similar object can be attained by using the peak-to-peak value detection and the average value detection of Fig. 14 as well as an computation circuit instead of the above described detection of the upper and lower ends performed in the circuits 48, 49, 50 and 51. The present embodiment is somewhat improved in traceability with respect to the scanning format of the input signal as compared with the sixth embodiment.

In both the sixth and seventh embodiments, the portion including the DET and AD can be omitted in application where only formats having nearly constant vertical screen sizes need be dealt with. In this case, the PC need not be a programmable counter, but need only be a counter which is reset every vertical period.

In application where the vertical screen size and the number of vertical scanning lines are nearly constant and only the horizontal scanning frequency and the horizontal screen size change format by format, it is possible to omit the circuits 1, 2, 4 and 5 of Fig. 14, replace PC 3′ by a simple counter reset every vertical period and use a signal source having a nearly fixed frequency instead of the VCO 2. In such application as well, the present embodiment is effective because the number of scanning lines changes format by format.

Fig. 16 shows an eighth embodiment of the present invention. In Fig. 16, a block 3″ is the same as the PC 3′ of Fig. 14. Numeral 53 of Fig. 16 denotes a microcomputer having a register therein. Numeral 54 denotes a variable-frequency signal source supplied with an analog or digital signal as an input from the microcomputer 53. The signal source 54 controls the frequency of the output signal so that the frequency may become in proportion to the average speed of vertical scanning. Numeral 55 denotes a digital signal for setting the count start number of the programmable counter 3″. Numeral 56 denotes a vertical retrace line pulse signal. At the tail edge of the pulse, i.e., at the time of end of a vertical retrace line, i.e., at the time of start of vertical scanning, the PC 3″ is reset to return to the original start number and continue counting. The above described variable-frequency signal source 54 can be easily realized by using a fixed-frequency oscillator having a sufficiently high frequency and a variable frequency-demultiplying counter, for example, together with a well-known technique. The digital output of the counter is connected to the circuit of Fig. 14. In the above described embodiment, formats having different vertical screen sizes and vertical deflection speeds can be dealt with by a register memory having an extremely small capacity.

A ninth embodiment of the present invention is shown in Fig. 17. In Fig. 17, blocks 2, 3″, 48 and 51 are the same as those of Fig. 15. In Fig. 17, numeral 12 denotes a signal corresponding to the vertical deflection current. Numeral 57 denotes a differentiating circuit. A voltage proportional to the vertical deflection speed is obtained at the output of the differentiating circuit 57. Numeral 58 denotes a negative-side amplitude detector. The negative-side amplitude becomes in proportion to the so-called vertical deflection speed in the vertical scanning interval. In proportion to the negative-side amplitude, the frequency of the VCO 2 and hence the count speed of the PC 3″ is controlled. Upon the tail edge of the vertical retrace line pulse 56, the PC 3″ is reset, an address close to that desired is obtained at the output of PC 3″.

By using the embodiment of the present invention heretofore described, it becomes possible to implement a digital convergence circuit capable of dealing with formats of a wide variety of signal sources having different number of scanning lines while confining the requisite memory capacity of the EPROM to the minimum. The embodiment has a high industrial value.

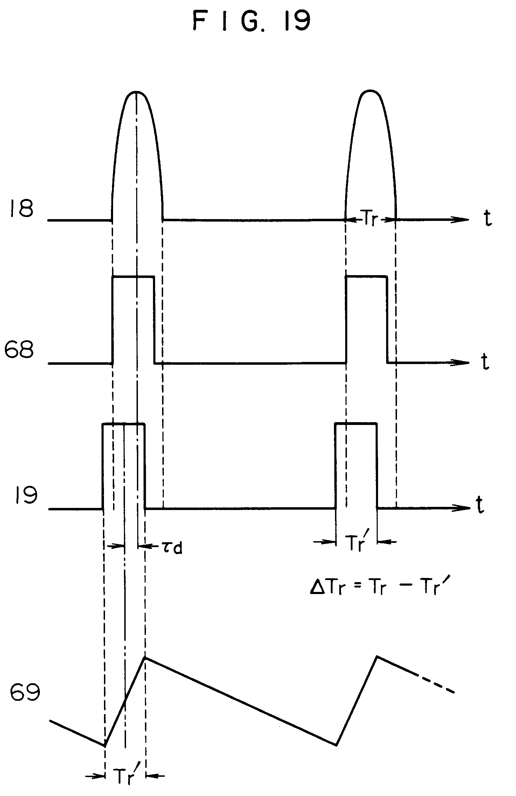

Generation of the correction waveform for preventing the remaining color shift at the left end portion of the screen will be described by referring to a tenth embodiment of the present invention shown in Fig. 18. The operation of Fig. 18 will now be described by referring to the corresponding waveform diagram shown in Fig. 19 as well.

An input 18 of a phase detector 1 is supplied w ith horizontal retrace line pulses. The output of the phase detector 1 is applied to a frequency control terminal of a voltage controlled oscillator (hereafter abbreviated to VCO) 2. The oscillation output of the VCO 2 is applied to a trigger input terminal of a monostable multivibrator (hereafter abbreviated to MM) 60. The output pulse width Tr′ of the MM 60 is so chosen as to become shorter than the width Tr of the retrace line interval of the horizontal retrace line pulse 18 by ΔTr. In typical application, ΔTr is chosen to be close to the transient response time of a convergence signal processing and amplifying section 70 located downstream. The transient response time of the section 70 is approximately one to two times as long as the rise time. The output of the MM 60 is applied to the input of a pulse delay circuit 61. The delay time $\tau$d of the pulse delay circuit 61 is chosen to be nearly equal to the delay time of the convergence signal processing and amplifying section 70. The delayed pulse 68 is negatively fed back to the phase detector 1.

13

The circuits 1, 2, 60 and 61 constitute a PLL loop as a whole. As a result of PLL operation, the rising edge of the delayed pulse output 68 is aligned in timing with the rising edge of the inputted horizontal retrace line pulse as shown in Fig. 19. At the input side 19 of the pulse delay circuit 61, therefore, a preceding pulse having a rising edge preceding the rising edge of the pulse 68 by the pulse delay amount $\tau$d as shown in Fig. 9 is obtained. This pulse is applied to an inverter 62. The peak-to-peak output value of the inverter 62 is in proportion to the power supply voltage Vcc and is proportionally controlled by controlling the Vcc by means of different means. The controlled output pulse is applied to an integrator 63 to produce a sawtooth wave 69 having the horizontal period at the output thereof. The timing of the waveform 69 is shown in Fig. 19. The amplitude of the sawtooth wave is detected and held by a peak-to-peak value detector 64. Another peak-to-peak value detector 65 is supplied with sawtooth wave proportional to the horizontal deflection position at its input to detect and hold the peak-to-peak amplitude value corresponding to the horizontal screen size. As the sawtooth wave voltage proportional to the horizontal deflection position, the horizontal deflection current can be used instead. The difference between the outputs of the peak-to-peak value detectors 64 and 65 undergoes differential amplification in a comparison amplifier 66 and is supplied to the above described inverter 62 via an LPF 67 to apply negative feedback control to the power supply voltage thereof. As a result of the negative feedback operation, it is possible to make the amplitude of the output sawtooth wave depend upon the horizontal screen size. The output sawtooth wave is applied to a CY 12 via a convergence signal processing and amplifying section 70 to correct and control the position of the electron beam of the CRT. As a result, the color shift is corrected as a whole including the left end of the screen. Although only one CY is illustrated in Fig. 18, four CY's are typically used for the vertical direction of red, the horizontal direction of red, the vertical direction of blue and the horizontal direction of blue, respectively.

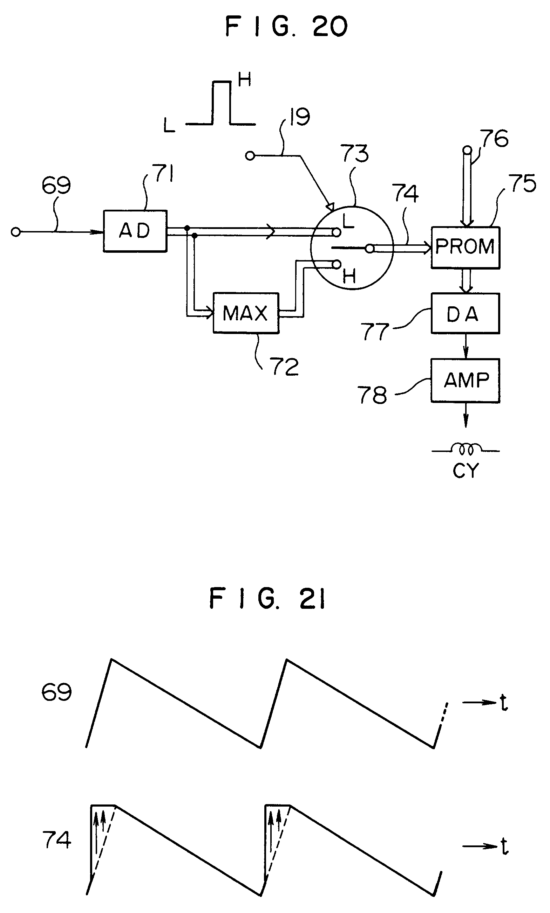

In case the present invention is applied to a digital convergence circuit using the digital technique, the value of the delay time $\tau$d is typically longer than 2 to 3% of the above described horizontal period because it takes time to perform digital data transfer processing. To comply with the delay time $\tau$d, therefore, the delay time of the pulse delay circuit is chosen. Further, the digital address signal for specifying the horizontal coordinate of the electron beam on the screen can be obtained by digitizing the sawtooth wave 69 outputted in Fig. 18 by an A-D converter. This is shown in Fig. 20 as an eleventh embodiment.

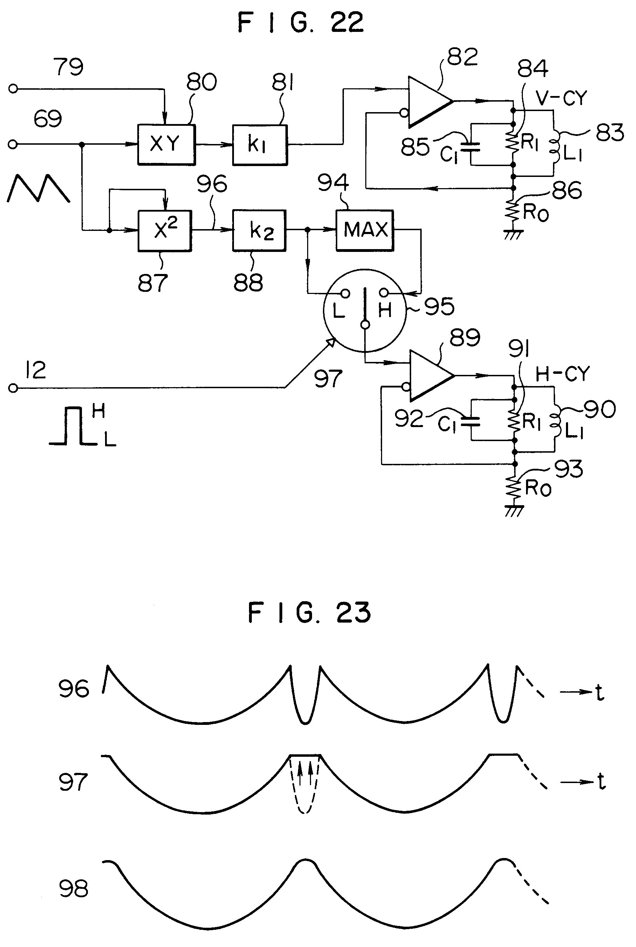

In Fig. 20, the input of an A-D converter 71 is supplied with the preceding sawtooth wave 69 of Figs. 18 and 19. Approximately 8-bit digitized address signal is outputted by the A-D converter 71. And the maximum address number corresponding to the left end of the screen is outputted by a maximum detection circuit 72. Upon receiving a supplementary input signal 19, i.e., the preceding retrace line pulse of Fig. 18, a digital multiplexer 73 selects the output address of the A-D converter 71 while the preceding pulse 19 is at "H", and selects the maximum address while the preceding pulse is at "L". At an output 74 of the multiplexer 73, therefore, a preceding address signal corresponding to a waveform 74 represented by solid lines in Fig. 21 is obtained. In the waveform 74, at least the waveform at the latter half is made to agree with the address of the left end portion of the screen to confine the influence of the transient oscillation of the convergence amplifying section at the left end portion of the screen to the minimum.

In Fig. 20, a datum for correcting the color shift is stored at each address of a programmable read only memory (PROM) 75. An address of the PROM 75 is defined by a vertical coordinate specifying address supplied by different means and the above described horizontal address. A digital datum is thus obtained at the output of the PROM 75. The datum is converted into an analog signal by a D-A converter 77 and amplified by an amplifying section 78. The CY is driven by the amplified signal. Finally, the color shift on the screen is corrected. The operation of the maximum detection circuit 72 and the multiplexer 73 has been described assuming that the signal is processed in the digital signal domain. However, it is also possible to process the signal in the domain of the analog signal 74. As well known, the amount of information delay caused by digital processing is typically in proportion to integer times the clock period. Accordingly, it is suitable to produce the amount of information delay by providing a delay element causing delay equivalent to the integer times the clock period in addition to the delay caused by the fixed delay element 61 of Fig. 18. By doing so, it is possible to automatically match and track a change of the horizontal scanning period of the input signal. Description of the eleventh embodiment is terminated here.

An example using an analog circuit for the convergence signal processing and amplifying section 70 of Fig. 18 is shown in Fig. 22 as a twelfth embodiment. In Fig. 22, numeral 69 denotes a wave identical with the preceding horizontal sawtooth wave 69 of Fig. 19. Numeral 79 denotes a vertical sawtooth wave. Although not illustrated in Fig. 22, a current flowing through the vertical deflection coil is taken out as voltage across a serially connected resistor by well-known means to produce the vertical sawtooth wave 79. A multiplier 80 is supplied with the preceding horizontal sawtooth wave 69 and the vertical sawtooth wave 79. The multiplier 80 thus outputs the product of the two input signals. As the multiplier 80, ICMC-1495L

14

produced by Motorola, USA, for example, may be used. The circuit of the present embodiment further includes a gain adjusting circuit 81, a negative-feedback power amplifier 82, inductance ($L_1$) 83 of the vertical convergence yoke (V-CY), stray capacitance ($C_1$) 85 of the V-CY and a dumping resistor ($R_1$) 84. This circuit corrects the keystone distortion shown in Fig. 2 by means of expansion and compression in the vertical direction. This negative feedback circuit makes a current $I_0$ flowing through $R_0$ track the input waveform. Assuming a current flowing through the actual V-CY is $I_1$, therefore, $I_1$ is represented by the output of a low-pass filter supplied with the input $I_0$ as

$$\frac{I_1}{I_0} = \frac{1}{1 + 2\zeta IP + (\tau p)^2} \tag{13}$$

where $\quad p = j\omega$

$$\tau = \sqrt{L_1 C_1}$$

$$2\zeta = \frac{1}{R_1} \sqrt{\frac{L_1}{C_1}} \quad . \tag{14}$$

An example of a set of constants in application to a horizontal scanning frequency $f_H \fallingdotseq 53$ kHz is indicated below.

$L_1 = 30\,\mu H$, $C_1 = 120$ pF, $R_1 = 160\,\Omega$ and $R_0 = 1\,\Omega$ therefore

$\tau = L_1 C_1 \fallingdotseq 60$ m sec, $2\zeta \fallingdotseq 1.6$

Accordingly, the cut-off frequency fc of the expression (13) is close to

$$\frac{1}{2\pi\tau} \fallingdotseq 2.6 \text{ MHz}.$$

Therefore, the rise time of a step response is close to

$$\frac{1}{2fe} \fallingdotseq 0.2 \text{ }\mu sec.$$

Further, its delay time is represented as

$\tau d \fallingdotseq 2\zeta\tau \fallingdotseq 0.1$ $\mu$sec.

Further, the bandwidth of the negative feedback amplifier 82 in a closed loop is typically approximately 0.8 MHz. Accordingly, the delay of the current $I_0$ itself with respect to the input is approximately 0.3 $\mu$sec, and its rise time becomes approximately 0.6 $\mu$sec.

By adding the above described delays, therefore, the total delay time of the circuit shown in Fig. 22 becomes approximately 0.4 $\mu$sec. On the basis of rms rule, the total rise time becomes

$(0.2\,\mu sec)^2 + (0.6\,\mu sec)^2 \fallingdotseq 0.63$ $\mu$sec.

The rise time of the step response can be nearly regarded as the primary transient oscillation time of the system. Therefore, the already described $\tau$d and $\Delta$Tr of Fig. 19 are respectively set as

$\tau$d $\fallingdotseq$ 0.4 $\mu$sec

$\Delta$Tr $\fallingdotseq$ 0.63 $\mu$sec.　　(15)

That is to say, the value of $\tau$d is equivalent to approximately 2% of the horizontal period 1/53 kHz $\fallingdotseq$ 19 $\mu$sec.

Description of the upper half of Fig. 22 is terminated here. The lower half of Fig. 22 will now be described. The lower half is provided for correcting the color shift of red and blue vertical lines (i.e., so-called linearity distortion).

In Fig. 22, the output 96 of a multiplier 87 has a waveform 96 shown in Fig. 23. In accordance with the change of the above described horizontal preceding pulse 19 of Fig. 18 between "H" and "L" levels, a gain adjusting section 88, a maximum value detecting and holding circuit 94 and an analog switch 95 produce an output represented by a waveform 97 of Fig. 23. That is to say, steep change portions within horizontal retrace line intervals are leveled. Otherwise, the succeeding negative feedback amplifying section 89 lacks in tracking speed. Because of an inductance load, a steep change of current causes overvoltage saturation. Numeral 90 denotes a horizontal convergence yoke H-CY. Numerals 91, 92 and 93 denote the same components as 84, 85 and 86, respectively.

In the prior art, an integrating circuit was simply used as the parabolic wave generating means located at the lower half of Fig. 22. In such configuration, it was not necessary to use the retrace line interval leveling circuit 94 and 95 of Fig. 22 because a waveform 98 shown in Fig. 23 is obtained. However, the integration scheme has a drawback that a change of the horizontal scanning frequency $f_H$ cannot be tracked, because the output amplitude of the integrating circuit is attenuated to half when $f_H$ is reduced to half, for example. As a result, the color shift remains by half. In the scheme of Fig. 22, this drawback is overcome.

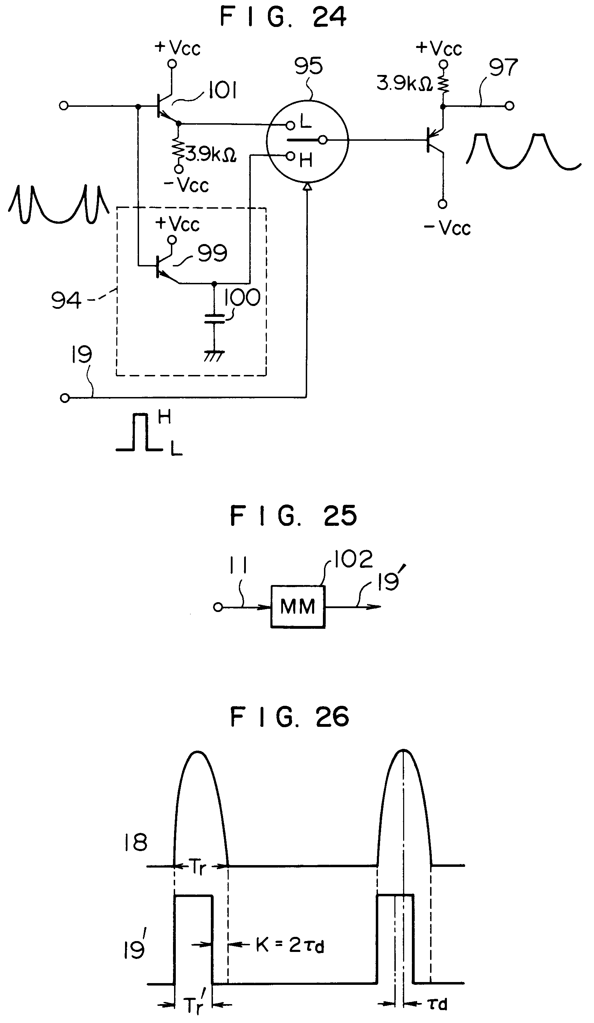

The concrete configuration of the maximum value detecting and holding circuit 94 of Fig. 22 is shown in Fig. 24. The maximum value is detected and held by a transistor 99 and a capacitor 100 surrounded by a broken line of Fig. 24. The on-state base-emitter potential difference of the transistor 99 is nearly equal to the base-emitter potential difference of an emitter follower 101. The value of the capacitor 100 is defined to be approximately 10 m$\mu$F or more so that the maximum value may be held during the horizontal retrace line interval.

Description of the twelfth embodiment is terminated here. Only one convergence output section is shown in each of Figs. 18 and 20. In Fig. 22, only two convergence output sections are shown. In reality, however, at least four convergence output sections are used for the vertical direction of red, the horizontal direction of red, the vertical direction of blue and the horizontal direction of blue. The analog convergence circuit of Fig. 22 can be used at the same time as the digital circuit of Fig. 1. In that case, the analog section of Fig. 22 performs approximate, the digital section of Fig 1 accurate colour shift correction.

Fig. 25 shows a primary part of a thirteenth embodiment. The thirteenth embodiment is a simplified version of the embodiment of Fig. 18. In Fig. 25, a monostable multivibrator 102 generates an output pulse 19', which is supplied to the inverter 62 instead of 19 shown in Fig. 18. That is to say, blocks 1, 2 and 60, 61 of Fig. 18 are omitted in the present embodiment. An input 18 of Fig. 25 is the horizontal retrace line pulse 19' of Fig. 26 and is identical with 19 of Fig. 18. As represented by 19' of Fig. 26, the output pulse 19' agrees with the input in the rising edge while its falling edge is set by the MM 102. The pulse width Tr' of the output pulse 19' is narrowed by K as compared with the pulse width of the input pulse. The magnitude of K is defined to be approximately twice the delay time $\tau$d of the succeeding amplifier.

As understood by comparing the waveform diagram of Fig. 19 corresponding to the embodiment of Fig. 18 with Fig. 26 of the present embodiment, common property is that the "centroid" of the retrace line pulse is advanced by the delay time $\tau$d of the succeeding amplifier section. By substituting exemplified numerical values of the expression (15), it is indicated that the decrease of the pulse width of the preceding pulse is 0.63 $\mu$sec in the embodiment of Fig. 19 while the decrease is 0.8 $\mu$sec in the embodiment of Fig. 26. As the pulse width is reduced, the succeeding amplifier section must perform the retrace line operation in a shorter time, resulting in disadvantage. Since the difference is comparatively small in the above described example, however, the embodiment of Fig. 25 also has a practical value.

The present invention makes it possible to correct the color shift at the left end portion of a display screen with high precision. Hence, a picture with higher precision can be displayed over a wider screen range. In application such as a computer graphics display having one million or more pixels, therefore, the present invention has a high industrial value.

16

The present invention makes it possible to implement a digital convergence circuit capable of dealing with formats of a wide variety of signal sources having different number of scanning lines while confining the required memory capacity of EPROM to the minimum.

The present invention makes it possible to constitute a digital convergence circuit capable of tracking a wide variety of signal source formats and correcting the color shift. As a result, displays can be used in various application fields.

## Claims

1. A convergence correction circuit used in a display apparatus with CRT, wherein on the basis of color shift correction digital data corresponding to representative grid points of an imaginary matrix corresponding to the screen of the display apparatus, color shift correction amounts of remaining points are derived by interpolation in the horizontal direction from adjacent data of an even-numbered representative grid point and of an odd-numbered grid point,

   **characterized** by

   a convergence correction circuit comprising

   triangular wave generating means (14) for generating symmetric triangular waves having a period equivalent to twice the space between the representative grid points and being related complementarily to even-numbered and odd-numbered data;

   weighted average circuit means (8, 9, 10) connected to said triangular wave generating means so as to derive interpolated correction amounts based upon weighted summation of even-numbered color shift correction data and odd-numbered color shift correction data by using said symmetric triangular waves as multipliers for the even- and odd-numbered correction data.

2. A convergence correction circuit according to claim 1 including color shift correction data memory means (40) for memorizing color shift correction data at nxm representative grid points arranged in vertical and horizontal directions of the screen, and correction data generating means (41) for generating color shift correction data at remaining points from said color shift correction data on the basis of the interpolation principle, characterized by

   a digital convergence correction circuit comprising:

   address signal generating means (3') for generating a vertical address signal as a digital signal on the basis of a virtual scanning line number coordinate system having twice or more scanning lines as many as scanning lines of a signal source;

   said address signal generating means (3') generating an address signal in synchronism with vertical scanning and supplying said address signal to said color shift correction data memory means (40); and

   said correction data generating means (41) deriving a color shift correction amount at a point on a vertical line passing through representative grid points by applying vertical interpolation to color shift correction data at said representative grid points read out from said correction data memory means (40) on the basis of said address signal.

3. A digital convergence correction circuit according to Claim 2, wherein said address signal generating means comprises counter means (3), and the difference between the count start point and the count end point of said counter is so set as to be in proportion to the screen size.

4. A digital convergence correction circuit according to Claim 2, wherein the number of bits used to represent the color shift correction amount is chosen such that the LSB has a magnitude close to the limit of color shift perception, and the LSB of vertically interpolated data at a point on a vertical line passing through said representative grid points has a magnitude corresponding to the perception limit of irregularity of luminance to increase the number of bits.

5. A convergence correction circuit apparatus using a CRT according to claim 1, characterized by a comprising:

   convergence yoke means (12) for color shift correction;

   processing and amplifying means (70) for driving said yoke;

   horizontal sawtooth wave signal generating means (63) for supplying horizontal sawtooth waves to said processing and amplifying means; and

   said sawtooth wave signal generating means generating a preceding sawtooth wave (69) of horizontal scanning period, said preceding sawtooth wave preceding a main horizontal deflection sawtooth wave current by an interval nearly equivalent to the delay time or said processing and amplifying means.

6. A convergence correction circuit according to Claim 5, wherein the retrace line interval width of said preceding sawtooth wave (69) is made narrower than the line retrace interval width of the main horizontal deflection by an interval nearly equivalent to the transient response time of said processing and amplifying means (70).

7. A convergence correction circuit according to Claim 5, wherein the value during the line retrace interval of said preceding sawtooth wave is kept at a value corresponding to the left end portion of the screen.

8. A convergence correction circuit according to Claim 5, wherein said processing and amplifying means (70) includes squaring means for squaring said preceding sawtooth wave, so that color shift on the screen may be corrected by the output of said squaring means.

9. A convergence correction circuit according to Claim 5, wherein said horizontal sawtooth wave signal generating means (63) includes means for delaying the main horizontal deflection sawtooth wave signal by an interval chosen so as to be nearly equal to the difference obtained by subtracting the delay time of said processing and amplifying means from an integer multiple of the horizontal period.

**Patentansprüche**

1. Schaltung zur Konvergenzkorrektur, verwendet in einer Anzeigevorrichtung mit KSR, wobei auf der Basis digitaler Farbverschiebungskorrekturdaten entsprechend repräsentativen Gitterpunkten einer imaginären Matrix, die dem Schirm der Anzeigevorrichtung entspricht, Farbverschiebungskorrekturbeträge verbleibender Punkte durch Interpolation in horizontaler Richtung aus benachbarten Daten eines geradzahligen repräsentativen Gitterpunktes und eines ungeradzahligen Gitterpunktes abgeleitet werden, gekennzeichnet durch eine Konvergenzkorrekturschaltung enthaltend
    einen Dreieckwellengenerator (14) zur Erzeugung von symmetrischen Dreieckwellen mit einer Periode äquivalent dem doppelten Abstand zwischen repräsentativen Gitterpunkten und in komplementärer Beziehung zu geradzahligen und ungeradzahligen Daten;
    eine Schaltung (8, 9, 10) zur Bildung gewichteter Durchschnittswerte, die mit dem Dreieckwellengenerator verbunden ist, um interpolierte Korrekturbeträge abzuleiten, basierend auf der gewichteten Summierung von geradzahligen Farbverschiebungskorrekturdaten und ungeradzahligen Farbverschiebungskorrekturdaten durch Verwendung der symmetrischen Dreieckwellen als Multiplikatoren für die gerad- und ungeradzahligen Korrekturdaten.

2. Konvergenzkorrekturschaltung nach Anspruch 1, enthaltend eine Speichervorrichtung (40) für Farbverschiebungskorrekturdaten zur Speicherung von Farbverschiebungskorrekturdaten an n x m repräsentativen Gitterpunkten, die in vertikaler und horizontaler Richtung des Schirms angeordnet sind, und eine Erzeugervorrichtung (41) für Korrekturdaten zur Erzeugung von Farbverschiebungskorrekturdaten an verbleibenden Punkten aus den Farbverschiebungskorrekturdaten auf der Basis des Interpolationsprinzips, gekennzeichnet durch eine digitale Konvergenzkorrekturschaltung, die enthält:
    eine Adreßsignalerzeugungsvorrichtung (3') zur Erzeugung eines vertikalen Adreßsignals als digitales Signal auf der Basis eines virtuellen Abtastzeilen-Koordinatensystems mit zwei- oder mehrmals so vielen Abtastzeilen als Abtastzeilen einer Signalquelle;
    wobei die Adreßsignalerzeugungsvorrichtung (3') ein Adreßsignal in Synchronismus mit dem vertikalen Abtasten erzeugt und das Adreßsignal an die Speichervorrichtung (40) der Farbverschiebungskorrekturdaten liefert, und
    wobei die Korrekturdatenerzeugungsvorrichtung (41) einen Farbverschiebungskorrekturbetrag an einem Punkt einer vertikalen Linie ableitet, die durch repräsentative Gitterpunkte läuft, durch Anwendung vertikaler Interpolation auf die Farbverschiebungskorrekturdaten an den repräsentativen Gitterpunkten, die auf der Basis des Adreßsignals aus der Speichervorrichtung (40) für Korrekturdaten ausgelesen werden.

3. Digitale Konvergenzkorrekturschaltung nach Anspruch 2, wobei die Adreßsignalerzeugungsvorrichtung eine Zählvorrichtung (3) umfaßt und die Differenz zwischen dem Zählbeginnpunkt und dem Zählendpunkt des Zählers so bestimmt ist, daß sie der Schirmgröße proportional ist.

4. Digitale Konvergenzkorrekturschaltung nach Anspruch 2, wobei die Zahl der Bits, die zum Repräsentieren des Farbverschiebungskorrekturbetrags verwendet werden, so gewählt ist, daß das untere Seitenband eine Größe nahe dem Grenzwert der Farbverschiebungserkennung hat, und das untere Seitenband der vertikal interpolierten Daten an einem Punkt auf einer vertikalen Linie, die durch repräsentative Gitterpunkte läuft, eine Größe hat, die zwecks Vergrößerung der Zahl der Bits der Wahrnehmungsgrenze der Luminanzunregelmäßigkeit entspricht.

5. Eine Konvergenzkorrekturschaltung in einer Vorrichtung mit einer KSR nach Anspruch 1, dadurch gekennzeichnet, daß sie enthält
eine Konvergenzjochvorrichtung (12) für die Farbverschiebungskorrektur;
eine Verarbeitungs- und Verstärkungsvorrichtung (70) zum Betreiben des Jochs;
eine Signalerzeugungsvorrichtung (63) für horizontale Sägezahnwellen zur Lieferung horizontaler Sägezahnwellen an die Bearbeitungs- und Verstärkungsvorrichtung; wobei
die Signalerzeugungsvorrichtung für eine Sägezahnwelle eine Vorlauf-Sägezahnwelle (69) der horizontalen Abtastperiode erzeugt, wobei die Vorlauf-Sägezahnwelle einem Hauptsägezahnstrom der horizontalen Ablenkung um ein Intervall vorläuft, das nahezu äquivalent der Verzögerungszeit der Verarbeitungs- und Verstärkungsvorrichtung ist.

6. Konvergenzkorrekturschaltung nach Anspruch 5, wobei die Rücklaufintervallbreite der Vorlauf-Sägezahnwelle (69) kleiner als die Rücklaufintervallbreite der horizontalen Hauptablenkung gemacht wird, und zwar um ein Intervall, das nahezu äquivalent der Übergangsreaktionszeit der Verarbeitungs- und Verstärkungsvorrichtung (70) ist.

7. Konvergenzkorrekturschaltung nach Anspruch 5, wobei der Wert während des Rücklaufintervalls der Vorlauf-Sägezahnwelle auf einem Wert gehalten wird, der dem linken Endteil des Schirms entspricht.

8. Konvergenzkorrekturschaltung nach Anspruch 5, wobei die Verarbeitungs- und Verstärkungsvorrichtung (70) eine Quadriervorrichtung enthält zur Quadrierung der Vorlauf-Sägezahnwelle, so daß die Farbverschiebung auf dem Schirm durch den Ausgang der Quadriervorrichtung korrigiert werden kann.

9. Konvergenzkorrekturschaltung nach Anspruch 5, wobei die Signalerzeugungsvorrichtung (63) für horizontale Sägezahnwellen Mittel umfaßt, um das Hauptsägezahnwellensignal für die horizontale Ablenkung um ein Intervall zu verzögern, das so gewählt ist, daß es nahezu gleich der Differenz ist, die man durch Subtrahieren der Verzögerungszeit der Verarbeitungs- und Verstärkungsvorrichtung von einem ganzzahligen Vielfachen der horizontalen Periode erhält.

**Revendications**

1. Circuit de correction de convergence, utilisé dans un dispositif d'affichage comportant un tube cathodique, dans lequel, sur la base de données numériques de correction de décalage de couleur correspondant à des points représentatifs de la grille d'une matrice imaginaire correspondant à l'écran du dispositif d'affichage, des quantités de correction de décalage de couleur de points restants sont obtenues par interpolation dans la direction horizontale à partir de données adjacentes d'un point représentatif de la grille portant un numéro pair et d'un point de la grille portant un numéro impair, caractérisé par
un circuit de correction de convergence comprenant
des moyens (14) de production d'ondes triangulaires, qui servent à produire des ondes triangulaires symétriques possédant une période équivalente au double de l'espace présent entre les points représentatifs de la grille et associées de façon complémentaire à des données portant des numéros pairs et impairs;
des moyens (8, 9, 10) constitués par un circuit de formation d'une moyenne pondérée, qui sont raccordés auxdits moyens de production des ondes triangulaires de manière à délivrer des quantités de correction interpolées sur la base d'une sommation pondérée de données de correction de décalage de couleur à numérotation paire et de données de correction de décalage de couleur à numérotation impaire moyennant l'utilisation desdites ondes triangulaires symétriques en tant que multiplicateurs pour les données de correction à numérotation paire et à numérotation impaire.

**2.** Circuit de correction de convergence selon la revendication 1, comprenant des moyens (40) formant mémoire de données de correction de décalage de couleur pour la mémorisation de données de correction de décalage de couleur en m x n points représentatifs de ta grille, disposés suivant des directions verticale et horizontale de l'écran, et des moyens (41) de production de données de correction servant à produire des données de correction de décalage de couleur en des points restants à partir desdites données de correction de décalage de couleur sur la base du principe d'interpolation,

caractérisé par

un circuit de correction de convergence numérique comprenant :

des moyens (3') de production d'un signal d'adresse, servant à produire un signal d'adresse vertical en tant que signal numérique sur la base d'un système de coordonnées de numéros de lignes de balayage virtuel, possédant deux lignes de balayage ou plus, en un nombre correspondant au nombre de lignes de balayage d'une source de signaux;

lesdits moyens (3') de production de signal d'adresse produisant un signal d'adresse en synchronisme avec le balayage vertical et envoyant ledit signal d'adresse auxdits moyens (40) formant mémoire de données de correction de décalage de couleur; et

lesdits moyens (41) de production de données de correction produisant une quantité de correction de décalage de couleur en un point situé sur une ligne verticale passant par des points représentatifs de la grille, moyennant l'application d'une interpolation verticale aux données de correction de décalage de couleur pour lesdits points représentatifs de la grille, lues à partir desdits moyens (40) formant mémoire de données de correction sur la base dudit signal d'adresse.

**3.** Circuit de correction de convergence selon la revendication 2, dans lequel lesdits moyens de production de signal d'adresse comprennent des moyens formant compteur (3), et la différence entre le point de départ du comptage et le point final de comptage dudit compteur est réglée de manière à être proportionnée à la taille de l'écran.

**4.** Circuit de correction de convergence selon la revendication 2, dans lequel le nombre de bits utilisés pour représenter la quantité de correction de décalage de couleur est choisi de telle sorte que le bit le moins significatif possède une amplitude proche de la limite de la perception du décalage de couleur, et que le bit le moins significatif des données interpolées verticalement en un point situé sur une ligne passant par lesdits points représentatifs de la grille possède une amplitude correspondant à la limite de perception de l'irrégularité de luminance pour accroître le nombre de bits.

**5.** Dispositif à circuit de correction de convergence, utilisant un tube cathodique, selon la revendication 1, caractérisé en ce qu'il comprend :

des moyens (12) formant collier de convergence pour la correction du décalage de couleur;

des moyens de traitement et d'amplification (70) pour la commande dudit collier;

des moyens (63) de production de signaux formés d'ondes horizontales en dents de scie, servant à délivrer des ondes horizontales en dents de scie auxdits moyens de traitement et d'amplification; et

lesdits moyens de production de signaux en ondes en dents de scie produisant une onde en dents de scie précédente (69) d'une période de balayage horizontale, ladite onde en dents de scie précédente précédant un courant principal de déviation horizontale à onde en dents de scie d'un intervalle presque équivalent au retard produit par lesdits moyens de traitement et d'amplification.

**6.** Circuit de correction de convergence selon la revendication 5, dans lequel la largeur de l'intervalle de retour du spot de ladite onde en dents de scie précédente (69) est réglée à une valeur inférieure à la largeur de l'intervalle du retour du spot de la déviation horizontale principale, d'un intervalle presque équivalent au temps de réponse transitoire desdits moyens de traitement et d'amplification (70).

**7.** Circuit de correction de convergence selon la revendication 5, dans lequel la valeur dans l'intervalle de retour du spot de ladite onde en dents de scie précédente est maintenue à une valeur correspondant à la partie d'extrémité de gauche de l'écran.

**8.** Circuit de correction de convergence selon la revendication 5, dans lequel lesdits moyens de traitement et d'amplification (70) comprennent des moyens de mise en forme carrée pour rendre carrée l'onde en dents de scie précédente de sorte que le décalage de couleur sur l'écran peut être corrigé par le signal de sortie desdits moyens de mise en forme carrée.

9. Circuit de correction de convergence selon la revendication 5, dans lequel lesdits moyens (63) de production de signal horizontal à ondes en dents de scie comprennent des moyens pour retarder le signal de déviation horizontale principal à ondes en dents de scie, d'un intervalle choisi de manière à être presque égal à la différence obtenue en soustrayant le retard produit par lesdits moyens de traitement et d'amplification, d'un multiple entier de la période horizontale.

# F I G. I

# F I G. 2

# F I G. 3

## F I G. 4

## F I G. 5

## F I G. 6

F I G. 7

F I G. 8

F I G. 9

25

EP 0 291 924 B1

# F I G. 10

(a) →t

(b) →t

$\leftarrow\Delta t$

(c) →t

(d) →t

$\leftarrow Tr$

(e) →t

# F I G. 11

(a) →t

(b) →t

$\leftarrow\Delta t$

(c) →t

(e) →t

26

# F I G. 12

# F I G. 13

27

# F I G. 14

# F I G. 15

# F I G. 16

# F I G. 17

# F I G. 18

29

# F I G. 19

$$\Delta Tr = Tr - Tr'$$

# F I G. 20

# F I G. 21

EP 0 291 924 B1

F I G. 22

F I G. 23

32

# F I G. 24

# F I G. 25

# F I G. 26